# DEMANDE DE BREVET EUROPEEN

(11) **EP 2 085 894 A1**
(43) Date de publication de la demande: **05.08.2009**
(21) Numéro de dépôt: 09151802.7
(22) Date de dépôt: 30.01.2009
(51) Int. Cl.: G06F 17/30, H04N 7/16

(54) **Procédé de génération de donnés permettant la recherche de compléments de contenus, système et serveur pour la mise en oeuvre du procédé**

(30) Priorité: 31.01.2008 FR 0800541
(71) Demandeur: Alcatel Lucent, 75008 Paris (FR)
(72) Inventeur: Delegue, Gérard, 91620 Nozay (FR); Baynaud, Erwan ALCATEL LUCENT Bell Labs France, 91620 Nozay (FR)
(74) Mandataire: Hedarchet, Stéphane

(57) **Abrégé**

L'invention concerne un procédé de génération de données permettant la recherche de compléments de contenus à destination de terminaux d'un réseau (1) de télécommunication, comprenant les étapes suivantes :
- sélectionner un contenu depuis un terminal (3),
- générer des informations d'identification du contenu sélectionné,
- envoyer vers un serveur de compléments de contenu (5) une requête de génération d'un marqueur, la requête contenant :
- des données d'identification de l'utilisateur, et
- les informations d'identification du contenu sélectionné,

- à partir du serveur (5) de compléments de contenus réceptionner ladite requête et générer et enregistrer un marqueur contenant,
- les données d'identification de l'utilisateur,
- les informations d'identification du contenu sélectionné, et
- des données caractéristiques de recherche permettant une recherche complémentaire de contenu en relation avec le contenu sélectionné.

L'invention concerne également un système, un terminal et un serveur pour la mise en oeuvre d'un tel procédé.

## Description

L'invention concerne les réseaux de télécommunication fixe ou mobile (par exemple de type GSM, GPRS, UMTS ou WiFi, ou encore un réseau Internet, ou un réseau câblé), et plus précisément la transmission par de tels réseaux de contenus à destination de terminaux aptes à recevoir et à afficher des contenus transmis.

On entend ici par contenu des ensembles de données définissant un programme de télévision, ou de vidéo, ou audio (radiophonique ou musieal), ou de jeux, ou multimédia ou encore un fichier informatique de données (ou « data »).

Par ailleurs, on entend ici par « réseau de télécommunication « tout type de réseau de télécommunication capable de transmettre, par exemple pat voie filaire ou sans fil, des contenus à des terminaux qui sont couplés à lui, et d'échanger avec ces mêmes terminaux des données ou des messages. Tout mode de transmission de contenu peut être envisagé, et notamment le mode point-à-point (ou « unicast ») ou le mode point-à-multipoints (ou « multicast »), ou encore le mode diffusion (ou « broadcast »).

En outre, on entend ici par « terminal » tout type d'équipement capable de recevoir des contenus d'un réseau du type précité et d'échanger des données, messages et requètes avec ce même réseau de télécommunication

Il pourra par exemple s'agir d'un téléphone mobile ou fixe, d'un assistant personnel numérique (ou PDA), d'un décodeur de programmes de télévision ou vidéos cryptés, d'un équipement de réception de programmes de télévision de type « Set- top box », d'un équipement de réception de programmes vidéos ou musicaux, ou d'un ordinateur fixe ou portable, ou d'un équipement embarqué dans un véhicule (voiture, camion, bus, train, et analogues).

Afin de satisfaire un grand nombre de clients, les de contenus proposent à leurs clients, par exemple un service interactif qui est censé correspondre au plus gros sous-ensemble d'entre eux.

L'invention a donc pour but d'améliorer les services interactifs connus de transmission de contenus, en permettant de fournir aux utilisateurs des contenus, éventuellement contextuels, personnalisés et adaptés à chaque utilisateur.

A cet effet, l'invention a pour objet un procédé de génération de données permettant la recherche de compléments de contenus à destination de terminaux d'un réseau de télécommunication, comprenant les étapes suivantes
_ sélectionner un contenu depuis un terminal,
_ générer des informations d'identification du contenu sélectionné,
_ envoyer vers un serveur de compléments de contenu une requête de génération d'un marqueur, la requête contenant:
   _ des données d'identification de l'utilisateur, et
   _ les informations d'identification du contenu sélectionné,
_ à partir du serveur de compléments de contenus réceptionner ladite requête et générer et enregistrer un marqueur contenant,
   _ les données d'identification de l'utilisateur
   _ les informations d'identification du contenu sélectionné, et
   _ des données caractéristiques de recherche permettant une recherche complémentaire de contenu en relation avec le contenu sélectionné.

Ainsi, chaque utilisateur peut de façon simple et aisée avoir accès de façon automatique à des compléments d'informations.

Selon une variante, le contenu sélectionné depuis le terminal est un contenu audiovisuel.

Selon un mode de réalisation préféré, le procédé comprend une étape de sélection à partir du terminal d'un marqueur enregistré, la sélection dudit marqueur déclenche une recherche des compléments de contenu par ledit serveur, à partir d'au moins certaines données contenues dans ledit marqueur sélectionné.

De façon avantageuse, le procédé comprend une étape dans laquelle ledit serveur envoie la liste des compléments de contenus recherchés relatifs audit marqueur sélectionné, audit terminal.

Judicieusement, la liste des compléments de contenu comporte en outre des informations explicatives du lien des compléments de contenu avec le contenu sélectionnné.

Préférentiellement, le procédé comprend une étape dans laquelle l'utilisateur du terminal sélectionne dans la liste au moins un desdits compléments de contenu recherchés.

Avantageusement le procédé comprend une étape de lecture par le terminal du complément de contenu recherché et sélectionné.

L'invention a également pour objet un système pour la mise en oeuvre d'un procédé de génération de données permettant la recherche de compléments de contenus à destination de terminaux d'un réseau de télécommunication selon l'une quelconque des revendications précédentes, comportant:
_ au moins un terminal comprenant:
   ● des moyens de sélection de contenu,
   ● des moyens de génération d'informations d'identification du contenu sélectionné,
   ● des moyens de transmission d'une requête vers un serveur de compléments de contenu de génération d'au moins un marqueur permettant la recherche de compléments ds contenus en relation avec le contenu sélectionné, la requête contenant:
      _ des données d'identification de l'utilisateur, et
      _ les informations d'identification du contenu sélectionné,
_ an moins un serveur de compléments de contenus à destination des terminaux, comprenant
   ● des moyens de réception de ladite requête transmise par le terminal contenant:
      _ les données d'identification de l'utilisateur, et
      _ les informations d'identification du contenu sélectionné,
   ● des moyens de génération à partir de ladite requête transmise par le terminal d'un marqueur contenant
      _ les données d'identification de l'utilsateur,
      _ les informations d'identification du contenu sélectionné, et
      _ des données caractéristiques de recherche permettant une recherche complémentaire de contenu en relation avec le contenu sélectionné.

L'invention a encore pour objet un terminal d'un réseau de télécommunication apte à recevoir un contenu et comprenant :
_ des moyens de sélection de contenu,
_ des moyens de génération des informations d'identification du contenu sélectionné,
_ des moyens de transmission d'une requête vers un serveur de compléments de contenu, d'au moins un marqueur permettant la recherche de compléments de contenus en relation avec le contenu sélectionné, la requête contenant :
   _ des données d'identification de l'utilisateur, et
   _ les informations d'identification du contenu sélectionné.

Enfin, l'invention a également pour objet un serveur de compléments de contenus à destination de terminaux d'un réseau de comprenant :
- des moyens de réception d'une requête transmise par un contenant
   _ les données d'identification de l'utilisateur, et
   _ les informations d'identification d'un contenu sélectionné,
- des moyens de génération à partir de ladite requête transmise par le terminal d'un marqueur contenant :
   _ les données d'identification de l'utilisateur,
   _ les d'identification du contenu sélectionné, et
   _ des données caractéristiques de recherche permettant une recherche complémentaire de contenu en relation avec le contenu sélectionné.

De façon préférée, le serveur comprend des moyens de recherche de compléments de contenu, à partir d'au moins certaines données, d'un marqueur sélectionné.

D'autres caractéristiques et avantages de l'invention de la description suivante, donnée à titre d'exemple, sans caractère limitatif, en regard des dessins annexés sur lesquels :
- la figure 1 illustre schématiquement la structure générale d'un système pour la mise en oeuvre d'un procédé de génération de données permettant la recherche de compléments de contenus selon l'invention,
- la figure 2 représente les étapes successives d'un procédé de génération de données permettant la recherche de compléments de contenus selon l'invention.

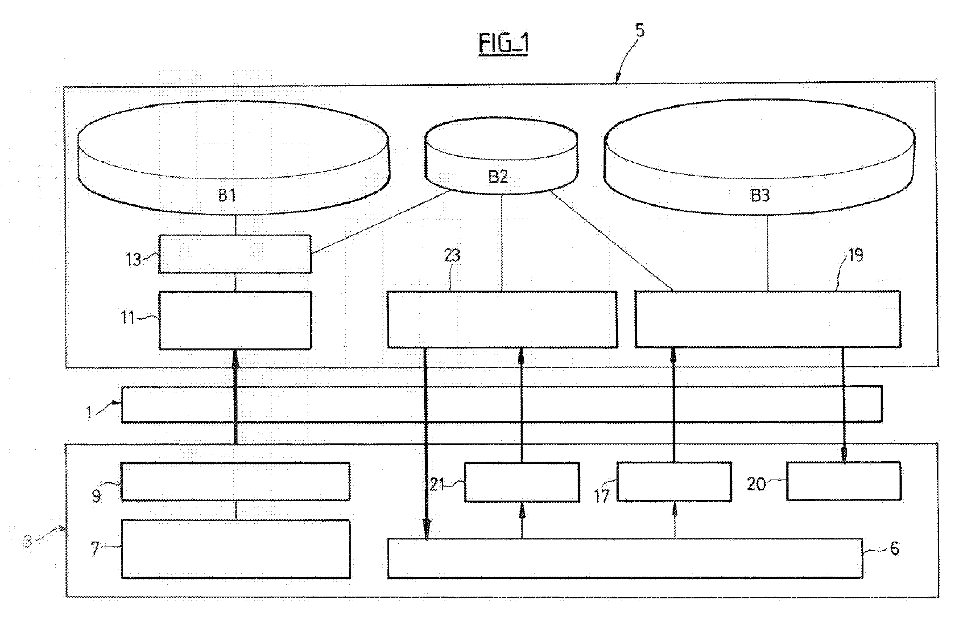

Sur la figure 1 est représenté un réseau de télécommunication 1 fixe ou mobile (par exemple de type GSM, GPRS, UMTS ou WIFI ou encore un réseau Internet ou un réseau câblé) qui transmet des contenus de programmes par exemple sous forme de flux il destination de terminaux aptes à recevoir et à afficher, par exemple sur un écran, les contenus transmis

Le réseau de télécommunication peut être tout type de réseau de télécommunication capable de transmettre, par exemple par voie filaire ou sans fil, des contenus à des terminaux qui sont couplés à lui, et d'échanger avec ces mêmes terminaux des données ou des messages. Tout mode de transmission de contenu peut être envisagé, et notamment le le mode point-à-point (ou « unicast ») ou le mode piont-à-multipoints (ou « multicast »), ou encore le mode diffusion (ou « broadcast »)

Le contenu transmis par le réseau de télécommunication 1 peur être un contenu audiovisuel par exemple des programmes de télévision ou de radio, ou des vidéos, ou en cote des jeux.

Ce réseau de télécommunication 1 comprend en outre un serveur 5 de compléments de contenu qui en interaction avec un terminal, permet la mise en oeuvre d'un procédé de génération de données par la recherche de compléments de contenus à destination de terminaux.

Dans l'exemple illustré, on a représenté sur la figure 1 un terminal 3 d'accès aux contenus mis à la disposition via le réseau de télécommunication 1 tels que les programmes de télévision ou de radio, ou encore des vidéos, etc. qui sont affichés sur des moyens d'affichage 6 du terminal 3. Le terminal 3 est eu outre, apte à échanger des données, messages et requétes avec le réseau de télécommunication 1 et en particulier avec le serveur 5 comme cela sera décrit plus loin.

Le terminal 3 peut être par exemple un téléphone mobile ou fixe, un assistant personnel numérique (ou PDA), un décodeur de programmes de télévision ou vidéos cryptés, un équipement de réception de programmes de télévision, un équipement de réception de programmes vidéos ou musicaux, ou un ordinateur fixe ou portable, ou encore un équipement embarqué dans un véhicule (voiture, camion, bus, train, et analogues).

Un utilisateur du terminal 3 peut, pendant que le terminal 3 affiche un contenu reçu via le réseau 1, faire une demande de recherche de compléments de contenus en relation avec le contenu reçu.

Pour cela, le terminal 3 comporte des moyens de sélection du contenu reçu. Une fonction du terminal 3 est alors activée pour générer des informations d'identification du contenu sélectionné, à l'aide de moyens de génération 7 du terminal 3. Pour un contenu reçu, le terminal 3 enregistre par exemple l'identifiant de la chaîne et l'heure. Pour une vidéo à la demande, le terminal 3 enregistre par exemple l'identifiant vidéo défini sur un guide de programmes électronique en anglais « ESG » pour Electronic Guide Service, ainsi que l'heure.

Le terminal 3 génère alors une requête de génération d'un marqueur dont le contenu, sera utilisé pour la recherche de compléments de contenus en relation avec le contenu sélectionné. Cette requête comprend les informations d'identification du contenu sélectionné, ainsi que des données d'identification de l'utilisateur.

Le terminal 3 comprend de plus, des moyens de transmission 9 sur le réseau 1 vers le serveur 5 de la requête générée en relation avec le contenu sélectionne.

Cette requête est reçue par des moyens de réception 11 du serveur 5 de compléments de contenus.

Ces moyens de réception 11 peuvent être réalisés sous la forme d'une passerelle.

Les moyens de réception 11 transmettent la requête à des moyens 13 du serveur 5, pour traiter cette requête.

En traitant la requête, le serveur 5 accède alors aux informations d'identification du contenu sélectionné et aux données d'identification de l'utilisateur.

Les moyens 13 du serveur 5, vont ensuite, générer un marqueur contenant :
- les données d'identification de l'utilisateur,
- les informations d'identification du contenu sélectionné, et
- des données caractéristiques de recherche permettant une recherche complémentaire de contenu en relation avec le contenu sélectionne.

Plus précisément, ces moyens 13 comportent des moyens de recherche d'informations de description concernant le contenu sélectionné, tel que des mots-clés décrivant le contenu sélectionne ou le titre de la scène sélectionnée, de manière à déterminer le thème du contenu sélectionné. Ces informations reprèsentent les données caractéristiques de recherche permettant une recherche complémentaire de contenu en relation avec le contenu sélectionné, qui sont intégrées dans le marqueur.

Cette recherche de complément de contenu peut être effectuée dans une base de données B1 par exemple dans un système de gestion de contenu, en anglais Content Management Systems ou CMS.

Une fois génère, le marqueur est enregistré par le serveur 5 dans une base de données B2 dédiée, et avantageusement, un message de confirmation de la génération et de l'enregistrement du marqueur dans la base de données B2, est envoyé au terminal 3 ayant émis la requête pour avertir l'utilisateur de la génération du marqueur relatif au contenu qu'il avait sélectionné.

Pour consulter le ou les compléments de contenu recherchés, l'utilisateur a soit la possibilité de sélectionner le marqueur contenu dans le message de confirmation soit la possibilité de consulter tous les marqueurs contenant ses données d'identification et enregistrés dans la base de données B2, par exemple sous forme d'une liste affichée sur des moyens d'affichage 6 du terminal 3, puis de sélectionner, à l'aide de moyens de sélection 17, un des marqueurs dans la liste.

De façon le terminal 3, comprend des moyens de transmission au serveur 5 d'une requête relative au marqueur sélectionné et demandant la transmission de compléments de contenus recherchés à partir des informations contenues dans le marqueur sélectionné.

Le serveur 5 lance alors la recherche des compléments de contenu en relation avec le contenu par l'utilisateur du terminal 3.

Pour réaliser cette recherche de compléments de contenu, le serveur 5 comprend des moyens de recherche 19 de compléments de contenu. Ces moyens de recherche 19 comprennent préférentiellement un moteur de recherche.

Cette recherche peut s'effectuer dans une base de données B3 interne du serveur 5. c'est-à-dire appartenir au fournisseur de contenus, mais également dans une base de données externe au serveur 5 afin d'avoir des références de pages Web par exemple,

Une fois la recherche terminée, le serveur 5 est apte à envoyer au terminal 3, une liste des différents compléments de contenus recherchés relatifs à un marqueur, et par conséquent au contenu associé.

Avantageusement, cette liste comporte en outre une information explicative du lien d'un complément de contenu avec le contenu sélectionné. Par exemple, l'utilisateur peut savoir si un complément de contenu est un contenu réalisé par le même réalisateur que le contenu sélectionne, ou s'il s'agit d'un contenu andiovisuel provenant de la même série de télévision qu'un contenu audiovisuel sélectionné, ou encore si le complément de contenu traite du même thème du contenu sélectionné, le thème ayant été déterminé à l'aide des informations de description recherchées par les moyens de recherche des moyens 13 de génération d'un marqueur du serveur 5.

Ainsi, les compléments de contenu sont transmis à l'utilisateur uniquement à sa demande.

Cette liste peut être affichée sur le terminal 3 et l'utilisateur peut sélectionner, à l'aide de moyens de sélection 20, au moins un complément de contenu parmi les différents compléments de contenus relatifs à un marqueur de la liste.

De cette façon, l'utilisateur a accès à ces compléments de contenus uniquement lorsqu'il le désire.

Le serveur 5 compose en outre des moyens de gestion 23 des marqueurs contenant l'ensemble des informations en relation avec un contenu associé enregistrés dans la base de données B2.

Ces moyens de gestion 23 permettent notamment de transmettre une liste des marqueurs enregistrés dans la base de données B2, et de supprimer les marqueurs périmés à partir de moyens 21 du terminal 3.

Selon une variante de réalisation, les marqueurs sont supprimés de façon automatique par le serveur 5 si le quota de sélection de marqueur par rapport à la durée de disponibilité du marqueur dans la base de données dédiée B2 est inférieur à un seuil prédéterminé.

En conséquence, la base de données B2 ne se retrouve pas encombrée de marqueurs obsolètes, l'utilisateur gère ainsi les marqueurs relatifs à des contenus qui l'intéressent.

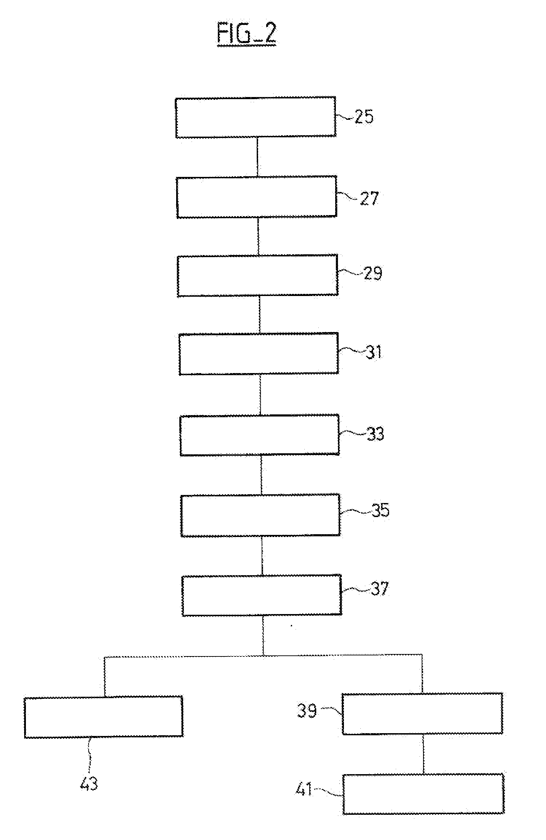

Comme l'illustre la figure 2, le procédé de génération de données permettant la recherche de compléments de contenus à destination de terminaux d'un réseau (1) de télécommunication comprend plusieurs étapes détaillées ci-après.

Si, lorsque le terminal 3 affiche un contenu, un utilisateur du terminal 3 désire avoir plus d'informations en relation avec ce contenu, il sélectionne alors depuis le terminal 3 ce contenu, c'est l'étape 25.

À la suite de cette étape 25, le terminal génère des informations d'identification du contenu sélectionné, lors d'une étape 27,

Puis, le terminal 3 envoie, au cours d'une étape 29, vers le serveur de compléments de contenu 5 une requête de génération d'un marqueur dont le contenu sera utilisé pour la recherche de compléments de contenus en relation avec le contenu sélectionné, la requête contenant:
- des données d'identification de l'utilisateur, et
- les informations d'identification du contenu sélectionné.

A réception de la requête, le serveur 5 recherche des informations supplémentaires de description du contenu sélectionné, tel que par exemple des mots-clés décrivant le contenu sélectionné. Cette recherche s'effectue dans une base de données B1 d'un système de gestion de contenus, en anglais « Content Management System » ou «CMS». Cette recherche permet notamment de définir le thème du contenu sélectionné, c'est l'étape 31.

À la suite, le serveur 5 génère lors d'une étape 33, un marqueur contenant :
- les données d'identification de l'utilisateur,
- les d'identification du contenu sélectionné, et
- des données caractéristiques de recherche permettant une recherche complémentaire de contenu en relation avec le contenu sélectionné. Ces données caractéristiques comprennent notamment les informations supplémentaires de description recherchées à l'étape 31.

Le serveur 5 enregistre ensuite à l'étape 33 le marqueur ainsi génére dans la base de données, B2.

De façon préférée, une fois le marqueur enregistré dans la base de données B2, le serveur 5 génère et envoie à destination du terminal 3, un message de confirmation de la génération et de l'enregistrement du marqueur dans la base de données B2.

Pour consulter le ou les compléments de contenu recherchés, selon un mode de réalisation, le procédé comprend une étape de sélection à partir du terminal 3 du marqueur contenu dans le message de confirmation.

Le procédé se poursuit avec une étape 35 de consultation de tous les marqueurs enregistrés dans la base de données B2 sous forme d'une liste, et de sélection à partir du terminal 3, d'un marqueur, contenant l'ensemble des informations en relation avec un contenu sélectionné, enregistré dans la base de données B2.

À cet effet, le procédé peut comprendre une étape dans laquelle le terminal 3 transmet au serveur 5 une requête relative au marqueur sélectionné et demandant la transmission de compléments de contenus recherchés.

Dans une étape 37 déclenchée par la sélection du marqueur, le serveur 5 recherche des compléments de contenu à l'aide des données caractéristiques de recherche permettant une recherche complémentaire de contenu en relation avec le contenu sélectionné. Cette recherche s'effectue dans une base de données B3 interne ou externe au serveur 5.

Préférentiellement, le procédé comprend une étape 39 dans laquelle le serveur 5 envoie au terminal 3 une liste des différents compléments de contenus recherchés qui sont relatifs au marqueur sélectionné par l'utilisateur du terminal 3 lors de l'étape 25.

Judicieusement, cette liste comporte en outre des informations explicatives du lien des compléments de contenu recherchés avec le contenu sélectionné.

À la suite de cotte étape 39, le procédé comprend une étape 41 dans laquelle l'utilisateur sélectionne le complément de contenu qu'il souhaite visionner à partir du terminal 3.

Cette étape 41, est suivie de façon avantageuse, d'une étape de lecture du complément de contenu sélectionné, par le terminal 3.

De façon préférée, le procédé comprend une étape 43 de suppression des marqueurs périmés à partir du terminal 3.

Le procédé est avantageusement mis en oeuvre par un système comportant au moins un serveur 5 de compléments de contenu et un terminal adapté tel que décris ci-dessus.

On comprend done qu'avec un tel procédé l'utilisateur dispose à sa demande d'un accès personnalisé et de compléments de contenus qui lui sont adaptés.

## Revendications

1. Procédé de génération de données permettant la recherche de compléments de contenus à destination de terminaux d'un réseau (1) de télécommunication, comprenant les étapes suivantes :
- sélectionner un contenu depuis un terminal (3),
- générer des informations d'identification du contenu sélectionné,
- envoyer vers un serveur de compléments de contenu (5) une requête de génération d'un marqueur, la requête contenant :
- des données d'identification de l'utilisateur, et
- les in formations d'identification du contenu sélectionné,
- à partir du serveur (5) de compléments de contenus réceptionner ladite requête et générer et enregistrer un marqueur contenant,
- les données d'identification de l'utilisateur,
- les informations d'identification du contenu sélectionné, et
- des données caractéristiques de recherche permettant une recherche complémentaire de contenu en relation avec le contenu sélectionné.

2. Procédé selon la revendication 1, dans lequel le contenu sélectionné depuis le terminal (3) est un contenu audiovisuel.

3. Procédé selon l'une des revendications 1 ou 2, comprenant une étape (35) de sélection à partir du terminal (3) d'un marqueur enregistré, et en ce que la sélection dudit marqueur déclenche une recherche (37) des compléments de contenu par ledit serveur (5), à partir d'au moins certaines données contenues dans ledit marqueur sélectionné.

4. Procédé selon la revendication 3, comprenant une étape (39) dans laquelle ledit serveur (5) envoie la liste des compléments de contenus recherchés relatifs audit marqueur sélectionné, audit terminal (3).

5. Procédé selon la revendication 4, dans lequel la liste des compléments de contenu comporte en outre des informations explicatives du lien des compléments de contenu avec le contenu sélectionné.

6. Procédé selon l'une des revendications 4 on 5, comprenant une étape (41) dans laquelle l'utilisateur du terminai (3) sélectionne dans la liste au moins un desdits compléments de contenu recherchés.

7. Procédé salon la revendication 5, comprenant une étape de lecture par le terminal (3) du complément de contenu recherché et sélectionné.

8. Système pour la mise en oeuvre procédé de génération de données permettant la recherche de compléments de contenus à destination de terminaux d'un réseau (1) de télécommunication selon l'une quelconque des, revendications précédentes, comportant :
_ au moins un terminal (3) d'un réseau de télécommunication apte à recevoir un contenu et comprenant :
• des moyens de sélection de contenu,
• des moyens de génération (7) d'informations d'identification du contenu sélectionné,
• des moyens de transmission (9) d'une requête vers un serveur de compléments de contenu (5) de génération d'au moins un marqueur permettant la recherche de compléments de contenus en relation avec le contenu sélectionné, la requête contenant :
- des données d'identification de l'utilisateur, et
- les informations d'identification du contenu sélectionné,
_ au moins un serveur (5) de compléments de contenus à destination de terminaux d'un réseau de télécommunication, comprenant :
• des moyens de réception de ladite requête transmise par le terminal (3) contenant :
- les données d'identification de l'utilisateur, et
- les informations d'identification du contenu sélectionné,
• des moyens de génération (11) à partir de ladite requête transmise par le terminal (3) d'un marqueur contenant:
- les données d'identification de l'utilisateur,
- les informations d'identification du contenu sélectionné et
- des données caractéristiques de recherche permettant une recherche complémentaire de contenu en relation avec le contenu sélectionné.

9. Terminal d'un réseau de télécommunication apte à recevoir un contenu et comprenant:
- des moyens de sélection de contenu,
- des moyens de génération (7) des informations d'identification du contenu sélectionné,
- des moyens de transmission (9) d'une requête vers un serveur de compléments de contenu (5), d'au moins un marqueur permettant la recherche de complèments de contenus en relation avec le contenu sélectionné, la requête contenant :
- des données d'identification de l'utilisateur, et
- les informations d'identification du contenu sélectionné.

10. Serveur de compléments, de contenus à destination de terminaux d'un réseau de télécommunication, comprenant :
- des moyens de réception d'une requête transmise par un terminal (3) d'un réseau de télécommunication contenant :
- les données d'identification de l'utilisateur, et
- les informations d'identification d'un contenu sélectionné,
- des moyens de génération (11) à partir de ladite requête transmise par ledit terminal (3) d'un marqueur contenant :
- les données d'identification de l'utilisateur,
- les informations d'identification du contenu sélectionné, et
- des données caractéristiques de recherche permettant une recherche complémentaire de contenu en relation avec le contenu sélectionné.

11. Serveur selon la revendication 10, comprenant des moyens de recherche (19) de compléments de contenu, à partir d'au moins certaines données d'un marqueur sélectionné.
